# EUROPÄISCHE PATENTSCHRIFT

(11) **EP 1 157 738 B1**
(45) Veröffentlichungstag und Bekanntmachung des Hinweises auf die Patenterteilung: **30.11.2005**
(21) Anmeldenummer: 01112112.6
(22) Anmeldetag: 17.05.2001
(51) Int. Cl.: B01J 19/00, B01J 19/24

(54) **Verweilzeitmodul für Mikroreaktoren**
Residence time modul for microreactors
Module de temps de séjour pour microréacteurs

(30) Priorität: 21.05.2000 DE 10024497
(43) Veröffentlichungstag der Anmeldung: 28.11.2001
(73) Patentinhaber: CPC Cellular Process Chemistry Systems GmbH, 55130 Mainz (DE)
(72) Erfinder: Golbig, Klaus, Dr., 63477 Maintal-Doernigheim (DE); Dittmann, Bernd, 65843 Sulzbach (DE); Oberbeck, Sebastian, 35781 Weilburg (DE)
(74) Vertreter: Kompter, Hans-Michael

(56) Entgegenhaltungen:
- EP-A- 1 031 375
- DE-A- 3 906 911
- FR-A- 2 416 209
- US-A- 1 356 922
- US-A- 3 466 269
- US-A- 4 292 409
- US-A- 5 690 763

## Beschreibung

Die Erfindung bezieht sich auf ein Verweilzeitmodul zur thermischen Nachbehandlung chemischer Reaktionsmedien aus Mikroreaktoren, wobei das Modul folgende Bestandteile aufweist:
(a) einen Formkörper (1) mit mindestens einer dreidimensional gewundenen Vertiefung (2), die sich auf mindestens einer Oberfläche des Formkörpers befindet, eine durch den Formkörper führende Öffnung (3), durch welche die mindestens eine Vertiefung mit einem Reaktionsmedium beschickt werden kann, und mindestens zwei mit Ventilen regulierbare Öffnungen (4, 5, 6) zur wahlweisen Entnahme des Reaktionsmediums;
(b) eine über die strukturierte Oberfläche bzw. die strukturierten Oberflächen des Formkörpers gelegte Abdeckung, welche die mindestens eine Vertiefung dichtend abschliesst und so mindestens einen kanalförmigen Hohlraum ausbildet;
(c) gegebenenfalls Vorrichtungen zur Temperaturregulierung und/oder Sensoren zur Kontrolle des Reaktionsverlaufs
wobei die gewundene Vertiefung (2) in einer Dimension kleiner als 1000 µm ist.

Um chemische Reaktionen durchführen zu können, muss der Chemiker verschiedene Parameter untersuchen, die für den Verlauf einer Reaktion verantwortlich sind. Diese Parameter sind unter anderem Temperatur, Druck, Mischungszeit, Intensität der Durchmischung, pH-Werte und schließlich die Art der Reaktionskinetik. Die Reaktionskinetik bestimmt die Zeit, die benötigt wird, um eine Molekülstruktur bei vorgegebenen Bedingungen in eine andere umzuwandeln.

In herkömmlichen Reaktoren (Batch-System) wird die Reaktionszeit nach Mischen der Reaktanten dadurch eingestellt, dass die Reaktionsmischung in dem Reaktionsgefäß solange verweilt, bis die gewünschte Nachreaktionszeit vergangen ist. Die sorgfältige Einstellung der Verweilzeit und präzise Temperaturkontrolle während dieser Zeit ist äußerst wichtig, um das gewünschte Produkt in der geforderten Qualität und Ausbeute zu erhalten.

Bei Mikroreaktoren ist es wesentlich komplizierter, genügend Verweilzeit zur Verfügung zu stellen. Mikroreaktoren stellen miniaturisierte Reaktionssysteme für die Verfahrenstechnik und die chemische Prozesstechnik dar. Solche Mikroreaktoren sind zum Beispiel aus der EP 0 688 242 B1 und der US 5,811,062 bekannt. Sie werden in der Regel aus einer Vielzahl von aufeinandergestapelten und miteinander verbundenen Plättchen aufgebaut, auf deren Oberflächen sich mikromechanisch erzeugte Strukturen befinden, die in ihrem Zusammenwirken Reaktionsräume bilden, um jeweils erwünschte chemische Reaktionen auszuführen.

Da solche Mikroreaktoren gewöhnlich kontinuierlich betrieben werden, ist es nicht empfehlenswert, das aus dem Mikroreaktor kommende Reaktionsgemisch in einen herkömmlichen Reaktor zu füllen und dort verweilen zu lassen.

Die bisher für Mikroreaktoren vorgeschlagenen Verweilzeitsysteme beruhen auf doppelwandigen Röhren, wobei das innere Rohr von der Reaktionsmischung und das äußere Rohr von einem Wärmetauschermedium durchflossen wird. Diese Systeme weisen eine Reihe von gravierenden Nachteilen auf: DieKonstruktionen sind vergleichsweise groß und weisen dennoch geringe Verweilvolumina auf. Zudem ist die Wärmekontrolle gering. Weiterhin bieten sie nur eine Möglichkeit der Produktentnahme. Daher benötigt man für jede Verweilzeit jeweils eine Ausführung dieser Systeme mit unterschiedlicher Länge.

Der Erfindung liegt daher die Aufgabe zugrunde, ein Verweilzeitmodul für Mikroreaktorsysteme zu schaffen, das auch den Einsatz bei verschiedenen Verweilzeiten erlaubt. Das Modul soll eine exakte Temperaturführung der Nachreaktion ermöglichen. Das Modul soll ferner preiswert herstellbar sein, um gegebenenfalls im Einwegsystem verwendet zu werden. Durch die Wahl der Fluidführungsöffnungen kann dieses Verweilzeitmodul, je nach Bedarf, beliebig mit Mikroreaktorsystemen kombiniert werden und lösbar oder unlösbar mit solchen verbunden werden.

Die gestellte Aufgabe wird aufgrund der Merkmale des Anspruchs 1 gelöst und durch die weiteren Merkmale der Unteransprüche ausgestaltet und weiterentwickelt. Im einzelnen werden Verweilzeitmodule gebildet, die sich im Hinblick auf die Nachreaktionszeit der durchzuführenden chemischen Reaktion geeignet anpassen lassen. Die modulare Bauweise ermöglicht eine einfache Anpassung an die jeweils auftretenden Bedingungen auch wechselnder Art, indem die Verweilzeit entsprechend der Lage der Produktentnahmeöffnungen verlängert oder verkürzt werden kann, um der Kinetik der gewählten Reaktion zu genügen.

Der Begriff Verweilzeit bedeutet vorstehend und nachfolgend die Zeit, die dem Reaktionsmedium zur Nachreaktion nach der Durchmischung in dem erfindungsgemäßen Modul zur Verfügung gestellt wird. In der Regel ist sie abhängig von der Durchflussgeschwindigkeit und dem Volumen der dreidimensional gewundenen, bevorzugt spiral- oder schraubenförmigen Vertiefung auf mindestens einer Seite des Formkörpers. Das Volumen der Vertiefung lässt sich durch die Länge und den Durchmesser des Moduls, die Ganghöhe der schraubenförmigen Windung sowie die geometrische Lage der Produktentnahmeöffnung vorbestimmen.

Der Begriff Reaktionsmedium umfasst Gemische oder Reinstoffe, die Edukte, d.h. Reaktanten oder Produkte enthalten.

Die Formgebung des erfindungsgemäßen Verweilzeitmoduls ist an sich unkritisch. Die einzelnen Formkörper können in jeder geometrischen Form vorliegen, z.B. als flächige oder dreidimensionale Gebilde. Vorzugsweise sind sie rechteckige oder runde Schichten oder runde, ovale, quadratische oder rechteckige Hohlkörper. Zylinder- und kegelförmige Hohlkörper, insbesondere Rohre, sind im Hinblick auf Herstellung einer schraubenförmigen Vertiefung und der Abdeckung besonders bevorzugt.

Vorzugsweise weisen runde Schichten einen Durchmesser von 10-40cm, insbesondere 20-30cm auf. Rechteckige Schichten haben bevorzugt Kantenlängen von 5-40 cm, insbesondere 10-30cm. Vorzugsweise weisen Hohlkörper eine Länge von 5,0 bis 20,0 cm, insbesondere 7,5 bis 18,0 cm, und einen Aussendurchmesser von 5,0 bis 20,0 cm, insbesondere 7,5 bis 15,0 cm auf.

Die Vertiefung muss so groß gewählt werden, dass das Reaktionsmedium sie problemlos passieren kann. Die kleinste lichte Weite der Vertiefung sollte keine Totwasserzonen, wie zum Beispiel Sackgassen oder scharfe Ecken, aufweisen, in denen sich eventuell vorhandene Teilchen absetzen können. Die Reaktionsmedien werden in einer kontinuierlichen Bahn geführt.

Die Vertiefung muss klein genug sein, um die immanenten Vorteile der Mikroreaktionstechnik, nämlich hervorragende Wärmekontrolle und laminare Strömung auszunutzen. Daher ist die Vertiefung in der Regel in einer Dimension kleiner als 1000 µm, vorzugsweise kleiner als 800 µm, insbesondere kleiner als 600 µm.

Vorzugsweise weist die Vertiefung eine Breite von 200 bis 1000 µm, insbesondere 400 bis 900 µm, und eine Tiefe von 100 bis 800 µm, insbesondere 200 bis 600 µm auf.

In einer weiteren bevorzugten Ausführungsform beträgt die helikale Ganghöhe der schraubenförmigen Vertiefung 200 bis 1500 µm, insbesondere 400 bis 1200 µm.

Als Materialien der Formkörper kommen Metall, Glas, Keramiksowie Kunststoffe in Betracht. Die Auswahl dieser Werkstoffe oder von Kombinationen davon richtet sich nach dem vorgesehenen Verwendungszweck. Bevorzugt ist Edelstahl.

Bei der chemischen Prozessführung müssen diverse Parameter beachtet werden. Deshalb ist der Einbau von Sensoren in das Verweilzeitmodul vorgesehen, insbesondere zur Erfassung der Temperatur, des Drucks, gegebenenfalls der Strömungsgeschwindigkeit und des Volumenstroms. Die Sensoren sind mit Regelkreisen verbunden, um den Betriebsablauf zu steuern und zu regeln.

Die Erfindung wird anhand der Zeichnungen beschrieben. Dabei zeigen:
Fig. 1a und 1b jeweils eine perspektivische Darstellung des inneren Formkörpers (1) des erfindungsgemäßen Verweilzeitmoduls in schematischer Darstellung.
Fig. 2 einen Längsschnitt des erfindungsgemäßen Verweilzeitmoduls in schematischer Darstellung.
Fig. 3 eine perspektivische Darstellung des erfindungsgemäßen Verweilzeitmoduls in schematischer Darstellung.

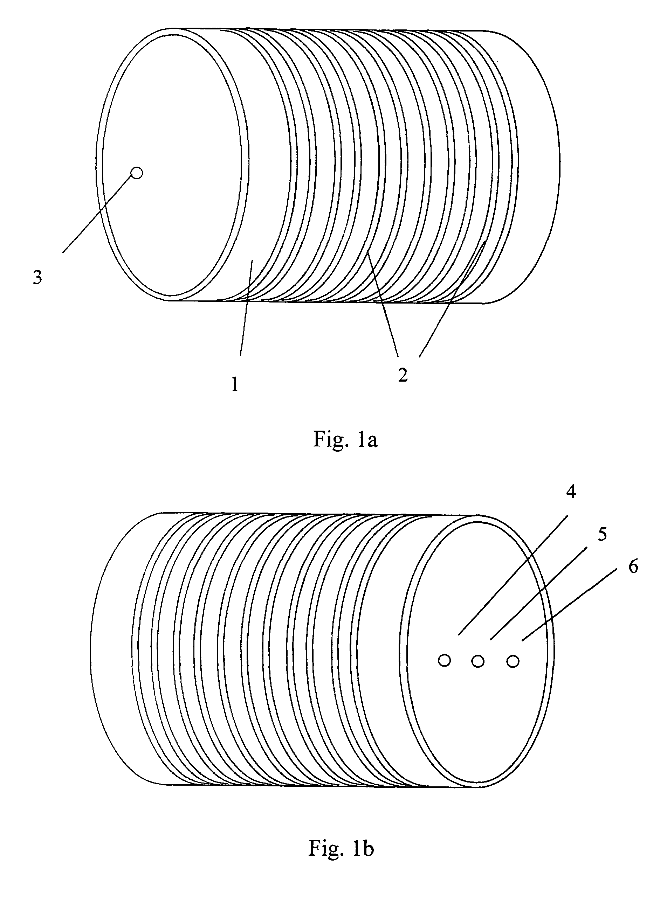

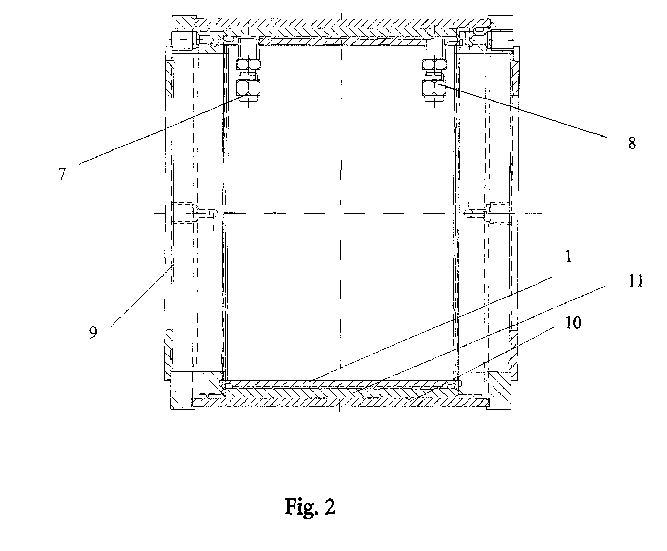

Das in Fig. 1a dargestellte Rohr (1) weist an seiner Aussenseite eine schraubenförmige Vertiefung (2) auf. Diese bildet mit der nicht in Fig. 1a/1b dargestellten, aufgeschrumpften Abdeckung eine Mikrokapillare, welche entlang des in Fig. 1a gezeigten Rohres (1) von links nach rechts verläuft. Im Betrieb wird diese Kapillare durch die Öffnung (3) mit dem nachzubehandelnden Reaktionsmedium beaufschlagt. Nach erfolgter Nachbehandlung wird das Reaktionsmedium durch eine der drei in Fig. 1b gezeigten Öffnungen (4, 5, 6) an der Innnenseite des Rohres abgeführt. Dabei ist die Verweilzeit bei Einsatz der Öffnung (4) kürzer als bei Einsatz von (5) bzw. (6).
Die einzelnen Öffnungen sind über Ventile regulierbar, so dass die Verweilzeit in Abhängigkeit der Reaktionskinetik der jeweiligen Reaktion kontrolliert werden kann.
Bei dem in Fig. 2 dargestellten Ausführungsbeispiel sei angenommen, dass das Rohr (11) über das mit der schraubenförmigen Vertiefung versehene Rohr (1) geschrumpft worden sei. Über die Produktzuleitung (7) wird das Reaktionsmedium über die in Fig. 1a gezeigte Öffnung (3) in die schraubenförmige Mikrokapillare (2) geleitet. Nach Durchlauf der Mikrokapillare wird das Produkt über eine der in Fig. 1b gezeigten Öffnungen (4, 5, 6) über den Anschluss (8) in einen Vorratsbehälter eingeleitet, oder, falls ein weiterer Reaktionsschritt vorgesehen ist, in ein weiteres Mikroreaktorsystem weitergeleitet.
Das Mikrokapillarsystem (1, 11) wird dabei von einem weiteren Rohr (10), welches ein Wärmetauschermedium aufnimmt, umschlossen. Dadurch findet die Nachreaktion in der schraubenförmigen Kapillare bei einer exakt vordefinierten Temperatur statt.
Als Wärmetauschermedium, also Kühl- und/oder Heizmedium, eignen sich flüssige Medien wie Wasser, Alkohole, Glykole, natürliche oder synthetische Öle, aber auch flüssige Metalle, die auf die gewünschte Temperatur abgekühlt oder erhitzt wurden.

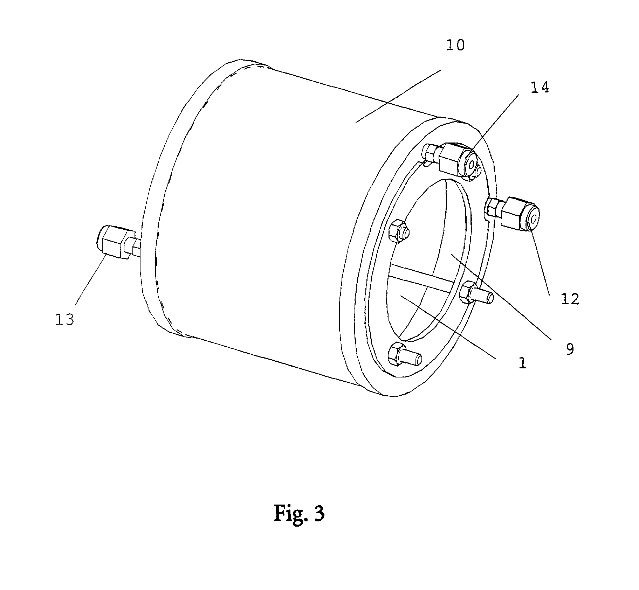

Bei dem in Fig. 3 dargestellten Ausführungsbeispiel wird das erfindungsgemäße Verweilzeitmodul über den Anschluss (12) mit dem Wärmetauschermedium beschickt, welches durch den Anschluss (13) wieder abgeführt wird. Der Entlüftungsanschluss (14) dient der Entlüftung des Wärmetauschers, gebildet aus dem Hohlraum zwischen Rohr 10 und 11.

Die einzelnen Formkörper können durch Schraubverbindungen oder Klammerpressen zusammengehalten werden, wenn es um eine lösbare Verbindung geht. Man kann auch Schweißen, Bonden, Kleben, Löten oder Nieten anwenden, wenn ein solches Reaktionssystem nach dem Zusammenbau nicht mehr verändert werden soll.

Ein weiterer Gegenstand der Erfindung ist ein Prozess zur Herstellung eines erfindungsgemäßen Verweilzeitmoduls, welcher folgende Schritte umfasst:
(a) Herstellen eines Formkörpers, von dem mindestens eine Oberfläche Mikro- und/oder Feinwerk-technisch so bearbeitet wird, dass er eine dreidimensional gewundene Vertiefung (2) sowie eine durch den Formkörper führende Öffnung (3) an einem Ende des Formkörpers, und mindestens zwei mit Ventilen regulierbare Öffnungen (4, 5, 6) in einer vorbestimmten Entfernung zur Öffnung (3) aufweist;
(b) Aufbringen einer über die strukturierte Oberfläche bzw. strukturierten Oberflächen des Formkörpers gelegten Abdeckung, welche die Vertiefung nach aussen dichtend abschliesst; und
(c) Gegebenenfalls Anbringen von Vorrichtungen zur Temperaturregulierung und/oder Anschlüssen für Sensoren zur Kontrolle des Reaktionsverlaufs.
In einer bevorzugten Ausführungsform wird in Schritt (b) die Abdeckung (11) unter Wärmeeinwirkung ausgedehnt, über den Formkörper (1) gestülpt und abgekühlt.

Die Strukturierung bei Schritt (a) kann durch Ätzen, Laser- und Wasserstrahlschneiden und -bohren, Stanzen und Prägen, Fräsen, Hobeln und Bohren, Spritzguss und Sintern sowie Funkerosiv und mit Kombinationen derselben erfolgen.

Vorzugsweise wird die Vertiefung auf der Oberfläche der Aussenseite des Formkörpers durch Ätzen, Laserstrahlschneiden und/oder -bohren hergestellt.

Der Werkstoff, aus dem die einzelnen Formkörper bestehen, richtet sich in erster Linie nach den zu verarbeitenden Stoffen und chemischen Prozessen. Allgemein kommen die für die Chemie tauglichen Werkstoffe Metall, Glas, Keramik und Kunststoff sowie Kombinationen dieser Werkstoffe in Betracht. Bevorzugt ist Edelstahl.

Insgesamt wird mit der Erfindung ein Verweilzeitmodul zur Verfügung gestellt, das die Integration verschiedener, für die Prozessführung bedeutsamer Funktionen ermöglicht und das aufgrund seiner Mikrostruktur zur Nachbehandlung von Reaktionsmedien aus Mikroreaktoren geeignet ist. Insbesondere eignet es sich für die thermische Nachbehandlung (post reaction) unterschiedlicher Reaktionen, welche verschiedene Verweilzeiten erfordern.

Weiterhin Gegenstand der Erfindung ist daher ein Verfahren zur Durchführung chemischer Reaktionen, wobei ein oder mehrere chemische Reaktanden in gasförmiger, fluider und/oder suspendierter Form in einem Mikroreaktor gegebenenfalls gemischt und unter Bildung eines flüssigen, gelösten oder suspendierten Reaktionsproduktes zur Reaktion gebracht werden, und das Reaktionsmedium zur postprozessuale Verweilzeit durch ein erfindungsgemäßes Verweilzeitmodul geleitet wird.Der Begriff "flüssige Form" umfasst sowohl Produkte, die selbst in einem flüssigem Aggregatzustand vorkommen, als auch Produkte, die in einem Gemisch mit einem fluiden Verdünnungsmittel eingesetzt werden. In einer besonders bevozugten Ausführungsform werden mindestens zwei Reaktanten in Gegenwart von mindestens einem Verdünnungsmittel in einem Mikroreaktor zur Reaktion gebracht und das erhaltene Reaktionsmedium in einem erfindungsgemäßen Verweilzeitmodul nachbehandelt.

## Patentansprüche

1. Verweilzeitmodul zur thermischen Nachbehandlung chemischer Reaktionsmedien aus Mikroreaktoren, wobei das Modul folgende Bestandteile aufweist:
(a) einen Formkörper (1) mit mindestens einer dreidimensional gewundenen Vertiefung (2), die sich auf mindestens einer Oberfläche des Formkörpers befindet, eine durch den Formkörper führende Öffnung (3), durch welche die mindestens eine Vertiefung mit einem Reaktionsmedium beschickt werden kann, und mindestens zwei mit Ventilen regulierbare Öffnungen (4, 5, 6) zur wahlweisen Entnahme des Reaktionsmediums;
(b) eine über die strukturierte Oberfläche bzw. die strukturierten Oberflächen des Formkörpers gelegte Abdeckung, welche die mindestens eine Vertiefung dichtend abschließt und so mindestens einen kanalförmigen Hohlraum ausbildet;
(c) gegebenenfalls Vorrichtungen zur Temperaturregulierung und/oder Sensoren zur Kontrolle des Reaktionsverlaufs,
und wobei die gewundene Vertiefung (2) in einer Dimension kleiner als 1000 µm ist.

2. Verweilzeitmodul nach Anspruch 1, **dadurch gekennzeichnet, dass** die dreidimensional gewundene Vertiefung spiralförmig oder schraubenförmig verläuft.

3. Verweilzeitmodul nach Anspruch 1 oder 2, **dadurch gekennzeichnet, dass** der Formkörper (a) mit der Abdeckung (b) zur Temperaturregulierung an einen weiteren Formkörper angrenzt und damit ein weiterer Hohlraum gebildet wird, in den Anschlüsse für die Zu- und Abfuhr von Wärmetauschermedien hineinführen.

4. Verweilzeitmodul nach einem der vorangehenden Ansprüche, wobei sowohl der Formkörper (1) als auch die Abdeckung Metallrohre sind, **dadurch gekennzeichnet, dass** der Aussendurchmesser des mit der schraubenförmigen Vertiefung versehenen Formköpers größer oder gleich dem Innendurchmesser der Abdeckung ist.

5. Verweilzeitmodul nach einem der vorangehenden Ansprüche, **dadurch gekennzeichnet, dass** die Öffnungen (4, 5, 6) zur wahlweisen Entnahme des Reaktionsmediums in genau vordefinierten Abständen von der Zufuhr-Öffnung (3) angebracht sind.

6. Verweilzeitmodul nach einem der vorangehenden Ansprüche, **dadurch gekennzeichnet, dass** der Formkörper (1) eine Länge von 5,0 bis 20,0 cm, einen Aussendurchmesser von 5,0 bis 20,0 cm aufweist.

7. Verweilzeitmodul nach einem der vorangehenden Ansprüche, **dadurch gekennzeichnet, dass** die Vertiefung (2) eine Breite von 200 bis 1000 µm und eine Tiefe von 100 bis 800 µm aufweisen.

8. Verweilzeitmodul nach einem der vorangehenden Ansprüche, **dadurch gekennzeichnet, dass** die die helicale Ganghöhe der Vertiefung 200 bis 1500 µm beträgt.

9. Modul nach einem der vorangehenden Ansprüche, **dadurch gekennzeichnet, dass** Sensoren (c) zur Erfassung von Prozessparametern, wie Temperatur, Druck, Strömungsgeschwindigkeit, Volumen- oder Massestrom, pH-Wert, entweder in einzelnen Funktionsmodulen oder außerhalb angebracht sind.

10. Modul nach Anspruch 9, **dadurch gekennzeichnet, dass** Regelkreise vorgesehen sind, die aufgrund der gemessenen Parameter den Materialfluss in den Öffnungen sowie die Temperatur regeln.

11. Verfahren zur Durchführung chemischer Reaktionen, wobei ein oder mehrere chemische Reaktanden in gasförmiger, fluider und/oder suspendierter Form in einem Mikroreaktor gegebenenfalls gemischt und unter Bildung eines flüssigen, gelösten oder suspendierten Reaktionsproduktes zur Reaktion gebracht werden, **dadurch gekennzeichnet, dass** das Reaktionsmedium zur postprozessualen Verweilzeit durch ein Modul nach einem der Ansprüche 1 bis 10 geleitet wird.

12. Prozess zur Herstellung eines Moduls nach einem der Ansprüche 1 bis 10, welcher folgende Schritte umfasst:
(a) Herstellen eines Formkörpers, von dem mindestens eine Oberfläche Mikro- und/oder Feinwerk-technisch so bearbeitet wird, dass er eine dreidimensional gewundene Vertiefung (2) sowie eine durch den Formkörper führende Öffnung (3) an einem Ende des Formkörpers, und mindestens zwei mit Ventilen regulierbare Öffnungen (4, 5, 6) in einer vorbestimmten Entfernung zur Öffnung (3) aufweist;
(b) Aufbringen einer über die strukturierte Oberfläche bzw. strukturierten Oberflächen des Formkörpers gelegten Abdeckung, welche die Vertiefung nach außen dichtend abschließt; und
(c) gegebenenfalls Anbringen von Vorrichtungen zur Temperaturregulierung und/oder Anschlüssen für Sensoren zur Kontrolle des Reaktionsverlaufs.

13. Prozess nach Anspruch 12, **dadurch gekennzeichnet, dass** in Schritt (b) die Abdeckung unter Wärmeeinwirkung ausgedehnt, über den Formkörper gestülpt und abgekühlt wird.

## Claims

1. Residence-time module for the thermal aftertreatment of chemical reaction media from microreactors, where the module has the following components:
(a) a shaped body (1) having at least one three-dimensionally wound recess (2), which is located on at least one surface of the shaped body, an opening (3) passing through the shaped body, through which the at least one recess can be charged with a reaction medium, and at least two openings (4, 5, 6), which can be regulated by means of valves, for optional withdrawal of the reaction medium;
(b) a cover laid over the structured surface or surfaces of the shaped body, which tightly seals the at least one recess and thus forms at least one channel-shaped cavity;
(c) optionally devices for temperature regulation and/or sensors for monitoring the course of the reaction,
and where the wound recess (2) is smaller than 1000 µm in one dimension.

2. Residence-time module according to Claim 1, **characterized in that** the three-dimensionally wound recess runs spirally or helically.

3. Residence-time module according to Claim 1 or 2, **characterized in that**, for temperature regulation, the shaped body (a) with the cover (b) adjoins a further shaped body, thus forming a further cavity into which run connections for the supply and discharge of heat-exchanger media.

4. Residence-time module according to one of the preceding claims, where both the shaped body (1) and the cover are metal tubes, **characterized in that** the external diameter of the shaped body provided with the helical recess is greater than or equal to the internal diameter of the cover.

5. Residence-time module according to one of the preceding claims, **characterized in that** the openings (4, 5, 6) for optional withdrawal of the reaction medium are provided at precisely pre-defined distances from the feed opening (3).

6. Residence-time module according to one of the preceding claims, **characterized in that** the shaped body (1) has a length of from 5.0 to 20.0 cm and an external diameter of from 5.0 to 20.0 cm.

7. Residence-time module according to one of the preceding claims, **characterized in that** the recess (2) has a width of from 200 to 1000 µm and a depth of from 100 to 800 µm.

8. Residence-time module according to one of the preceding claims, **characterized in that** the helical pitch of the recess is from 200 to 1500 µm.

9. Module according to one of the preceding claims, **characterized in that** sensors (c) for recording process parameters, such as temperature, pressure, flow rate, volume or mass flow, pH, are provided either in individual functional modules or outside.

10. Module according to Claim 9, **characterized in that** control loops are provided which, on the basis of the measured parameters, regulate the material flow into the openings and the temperature.

11. Process for carrying out chemical reactions, in which one or more chemical reactants in gaseous, fluid and/or suspended form are optionally mixed in a microreactor and brought to reaction, with formation of a liquid, dissolved or suspended reaction product, **characterized in that** the reaction medium is, for the post-process residence time, passed through a module according to one of Claims 1 to 10.

12. Process for the production of a module according to one of Claims 1 to 10, which comprises the following steps:
(a) production of a shaped body, at least one surface of which is micro- and/or precision engineered in such a way that it has a three-dimensionally wound recess (2) and an opening (3), passing through the shaped body, at one end of the shaped body, and at least two openings (4, 5, 6), which can be regulated by means of valves, at a pre-determined distance from the opening (3);
(b) application of a cover laid over the structured surface or surfaces of the shaped body, which tightly seals the recess from the outside; and
(c) optionally installation of devices for temperature regulation and/or connections for sensors for monitoring the course of the reaction.

13. Process according to Claim 12, **characterized in that**, in step (b), the cover expands on exposure to heat, is folded over the shaped body and is cooled.

## Revendications

1. Module de temps de séjour pour le traitement thermique ultérieur de milieux réactionnels chimiques de microréacteurs, le module présentant les éléments suivants :
(a) un corps moulé (1) doté d'au moins une cavité (2) spiralée tridimensionnelle qui se trouve sur au moins une surface du corps moulé, une ouverture (3) conduisant au travers du corps moulé, par laquelle au moins une cavité peut être chargée avec un milieu réactionnel et au moins deux ouvertures (4, 5, 6) réglables par des soupapes pour prélèvement au besoin du milieu réactionnel ;
(b) un couvercle placé sur la surface structurée ou sur les surfaces structurées du corps moulé, qui ferme hermétiquement au moins une cavité et constitue ainsi au moins un espace creux formant un canal ;
(c) éventuellement, des dispositifs de régulation de la température et/ou des capteurs pour le contrôle de l'évolution de la réaction,
et dans lequel la cavité spiralée (2) est inférieure, dans une dimension, à 1000 µm.

2. Module de temps de séjour selon la revendication 1, **caractérisé en ce que** la cavité spiralée tridimensionnelle est de forme en spirale ou hélicoïdale.

3. Module de temps de séjour selon la revendication 1 ou 2, **caractérisé en ce que** le corps moulé (a) avec le couvercle (b) pour réglage de la température, jouxte un autre corps moulé et ainsi, un autre espace creux est formé, conduisant aux raccordements d'amenée et de sortie des milieux d'échanges thermiques.

4. Module de temps de séjour selon l'une quelconque des revendications précédentes, dans lequel le corps moulé (1) ainsi que le couvercle sont des tubes métalliques, **caractérisé en ce que** le diamètre extérieur du corps moulé doté de la cavité spiralée est supérieur ou égal au diamètre intérieur du couvercle.

5. Module de temps de séjour selon l'une quelconque des revendications précédentes, **caractérisé en ce que** les ouvertures (4, 5, 6) sont aménagées pour le prélèvement au besoin du milieu réactionnel à intervalles exactement prédéfinis de l'ouverture d'amenée (3).

6. Module de temps de séjour selon l'une quelconque des revendications précédentes, **caractérisé en ce que** le corps moulé (1) présente une longueur de 5,0 à 20,0 cm, un diamètre extérieur de 5,0 à 20,0 cm.

7. Module de temps de séjour selon l'une quelconque des revendications précédentes, **caractérisé en ce que** la cavité (2) présente une largeur de 200 à 1000 µm et une profondeur de 100 à 800 µm.

8. Module de temps de séjour selon l'une quelconque des revendications précédentes, **caractérisé en ce que** la hauteur du pas hélicoïdal de la cavité est de 200 à 1500 µm.

9. Module de temps de séjour selon l'une quelconque des revendications précédentes, **caractérisé en ce que** les capteurs (c) pour la saisie des paramètres de traitement tels que la température, la pression, la vitesse d'écoulement, le débit volumique ou la masse, le pH, sont aménagés soit dans des modules fonctionnels individuels, soit à l'extérieur.

10. Module selon la revendication 9, **caractérisé en ce que** des circuits de réglage sont prévus, qui règlent sur la base des paramètres mesurés, le flux de matériau dans les ouvertures ainsi que la température.

11. Procédé de réalisation de réactions chimiques, dans lequel on fait réagir un ou plusieurs réactifs chimiques sous forme gazeuse, fluide et/ou en suspension éventuellement mélangés dans un microréacteur et en formant un produit réactionnel liquide, dilué ou en suspension, **caractérisé en ce que** le milieu réactionnel est conduit pour une durée de séjour consécutive au traitement, dans un module selon l'une quelconque des revendications 1 à 10.

12. Procédé de production d'un module selon l'une quelconque des revendications 1 à 10, qui comprend les étapes suivantes :
(a) production d'un corps moulé, dont au moins une surface est traitée par microtechnique et/ou technique de précision, de telle sorte qu'il présente une cavité spiralée (2) tridimensionnelle ainsi qu'une ouverture (3) conduisant au travers du corps moulé, à une extrémité du corps moulé, et au moins deux ouvertures (4, 5, 6) réglables par des soupapes à une distance prédéterminée par rapport à l'ouverture (3) ;
(b) la mise en place d'un couvercle placé sur la surface structurée ou sur la surface structurée du corps moulé qui ferme hermétiquement vers l'extérieur la cavité ;
(c) éventuellement, la mise en place de dispositifs de régulation de la température et/ou de raccords pour les capteurs assurant le contrôle de l'évolution de la réaction.

13. Procédé selon la revendication 12, **caractérisé en ce que** le couvercle de l'étape (b) se dilate sous l'effet de la chaleur, est retourné et refroidi sur le corps moulé.
